Europäisches Patentamt

(19) European Patent Office

Office européen des brevets

(11) Numéro de publication : **0 278 942 B1**

(12) # FASCICULE DE BREVET EUROPEEN

(45) Date de publication du fascicule du brevet :
**19.06.91 Bulletin 91/25**

(51) Int. Cl.$^5$ : **C23C 26/02, B23K 26/00, B21B 27/00**

(21) Numéro de dépôt : **88870010.1**

(22) Date de dépôt : **26.01.88**

(54) **Procédé pour le traitement superficiel d'un cylindre de laminoir.**

(30) Priorité : **30.01.87 LU 86753**

(43) Date de publication de la demande :
**17.08.88 Bulletin 88/33**

(45) Mention de la délivrance du brevet :
**19.06.91 Bulletin 91/25**

(84) Etats contractants désignés :
**AT DE FR GB IT NL SE**

(56) Documents cités :
**EP-A- 0 162 601
EP-A- 0 184 568
EP-A- 0 190 378
DE-A- 3 608 286
FR-A- 2 385 810
GB-A- 2 029 308
PATENT ABSTRACTS OF JAPAN, vol. 6, no.
261 (C-141)[1139], 21 décembre 1982; & JP-
A-57 155 363**

(73) Titulaire : **CENTRE DE RECHERCHES
METALLURGIQUES CENTRUM VOOR
RESEARCH IN DE METALLURGIE Association
sans but lucratif
Vereniging zonder winstoogmerk Rue
Montoyer, 47
B-1040 Bruxelles (BE)**

(72) Inventeur : **Halleux, Jacques
29, rue Sur la Carrière
B-4546 Richelle (BE)**

(74) Mandataire : **Lacasse, Lucien Emile et al
CENTRE DE RECHERCHES
METALLURGIQUES Abbaye du Val-Benoît 11,
rue Ernest Solvay
B-4000 Liège (BE)**

## Description

La présente invention concerne un procédé pour le traitement superficiel d'un cylindre de laminoir. Elle se rapporte plus particulièrement à un procédé de marquage de la surface d'un cylindre de laminoir à froid devant conférer une rugosité contrôlée à un tôle d'acier.

On connaît, par diverses propositions antérieures du même Demandeur, et notamment par son brevet belge n° 870.609, un procédé pour marquer la surface d'un cylindre de laminoir au moyen d'un faisceau laser intermittent. Ce procédé connu permet de former dans cette surface des microcratères distribués selon un motif prédéterminé et qui, en s'imprimant dans la surface des tôles, confèrent à celles-ci la rugosité désirée. Après un certain temps d'utilisation des cylindres, leur rugosité diminue et les cylindres doivent être reconditionnés pour retrouver leur état de surface initial. Un cylindre usagé doit être démonté du laminoir, rectifié, marqué à nouveau, puis remonté dans le laminoir. Ces opérations, ainsi que les manipulations et les réglages qu'elles exigent, entraînent des pertes de temps et des frais importants qui se répercutent sur le coût du cylindre. Il est donc avantageux d'espacer ces reconditionnements, c'est-à-dire de diminuer la vitesse d'usure de la rugosité.

Le brevet BE-A-901.055 révèle un procédé destiné à améliorer la durée de vie de cylindres de laminoir marqués par la technique précitée. Ce procédé consiste à appliquer un revêtement métallique sur la surface du cylindre puis à traiter le cylindre ainsi revêtu au moyen d'un faisceau laser intermittent de façon à fondre localement le revêtement métallique et la surface du cylindre sous-jacent et de provoquer ainsi la formation de bourrelets alliés autour des microcratères. Ce procédé permet d'améliorer sensiblement la dureté, et par conséquent la durée de vie des bourrelets proprement dits. Il est cependant apparu que l'adhérence des bourrelets alliés sur le revêtement métallique n'était pas toujours suffisante et que des bourrelets étaient quelquefois arrachés au cours du laminage. Dans ce cas, l'arrachement d'un bourrelet peut déjà se produire après une faible durée d'utilisation du cylindre. La durée de vie de celui-ci s'en trouve réduite et en outre, le bourrelet ainsi détaché et entraîné peut provoquer une dégradation de la surface du produit laminé.

La présente invention a pour objet un procédé permettant de remédier à cet inconvénient en améliorant l'ancrage des bourrelets de façon à prévenir leur arrachement et à accroître la durée de vie du cylindre ainsi traité.

Conformément à la présente invention, le procédé pour le traitement superficiel d'un cylindre de laminoir au moyen d'un faisceau laser intermittent, dans lequel on applique sur au moins une partie de la surface dudit cylindre un revêtement constitué, au moins en partie, d'une substance métallique, est caractérisé en ce que l'on chauffe superficiellement le cylindre revêtu jusqu'à une température suffisante pour provoquer la fusion dudit revêtement et d'une mince couche superficielle du cylindre, en ce que l'on forme à la surface du cylindre une couche ininterrompue d'alliage fondu composée d'au moins une partie dudit revêtement et de ladite mince couche superficielle du cylindre, en ce que l'on refroidit ladite couche d'alliage fondu et en ce que l'on effectue ensuite le marquage du cylindre au moyen d'un faisceau laser intermittent qui assure localement la fusion de la dite couche d'alliage et de la surface du cylindre, ainsi que la formation de microcratères dont le fond et le bourrelet sont, après solidification, intégrés à ladite couche d'alliage.

Le mécanisme de formation des microcratères et des bourrelets précités est à présent bien connu des praticiens. Pour mémoire, on rappellera brièvement que, dans la zone d'impact d'une impulsion laser, la surface du cylindre est le siège d'une fusion localisée avec refoulement du métal fondu vers la périphérie de cette zone. Il se forme ainsi, autour du microcratère obtenu, un bourrelet métallique qui se solidifie très rapidement, en raison de la très faible durée de l'impulsion laser qui lui a donné naissance. Ce bourrelet joue un rôle très important dans la formation de la rugosité contrôlée de la tôle laminée au moyen de ce cylindre.

A cet effet, on chauffe superficiellement le cylindre revêtu, au moins jusqu'à la température de fusion du métal soit du revêtement soit de la surface du cylindre, qui possède la température de fusion la plus élevée. Les cylindres de laminoir sont généralement en acier et le revêtement utilisé ici est de préférence constitué d'au moins un métal choisi parmi le chrome, le cobalt et le nickel.

Selon une mise en oeuvre particulière du procédé de l'invention, on chauffe superficiellement le cylindre revêtu, au moyen d'un faisceau laser continu.

Toujours selon l'invention, il s'est avéré intéressant de mettre le cylindre revêtu en rotation autour de son axe longitudinal, de chauffer superficiellement ledit cylindre, jusqu'à une température suffisante pour provoquer la fusion du revêtement et d'une mince couche superficielle dudit cylindre, au moyen d'un premier faisceau laser continu focalisé dont le point d'impact décrit une trajectoire hélicoïdale sur la surface du cylindre revêtu, de refroidir la couche d'alliage formée à l'interface entre le revêtement et la couche superficielle du cylindre et de marquer ensuite le cylindre au moyen d'un second faisceau laser intermittent focalisé dont le point d'impact décrit, avec un certain retard, la même trajectoire hélicoïdale que le point d'impact dudit premier faisceau laser.

Le retard précité doit être suffisant pour que la couche d'alliage fondu par le premier faisceau laser ait le temps de se solidifier avant d'être frappée par le second faisceau laser. En raison de la faible épaisseur de cette couche et, par conséquent, des faibles masses métalliques mises en jeu, cette solidification est assurée en un temps très court, généralement inférieur à 0,5 s.

Les trajectoires hélicoïdales précitées sont produites en imprimant au cylindre un mouvement de translation longitudinal par rapport aux faisceaux lasers ou inversement, avec une synchronisation telle que lesdites trajectoires couvrent toute la surface à traiter sur le cylindre.

L'objet de la présente invention est décrit en détail ci-dessous en faisant référence aux dessins annexés, dans lesquels la

figure 1      représente schématiquement un montage permettant la réalisation de microcratères à la surface d'un cylindre de laminoir ; la

figure 2      montre, en coupe, un microcratère obtenu par la technique antérieure et la

figure 3      illustré, également en coupe, l'obtention d'un microcratère amélioré par le procédé de la présente invention.

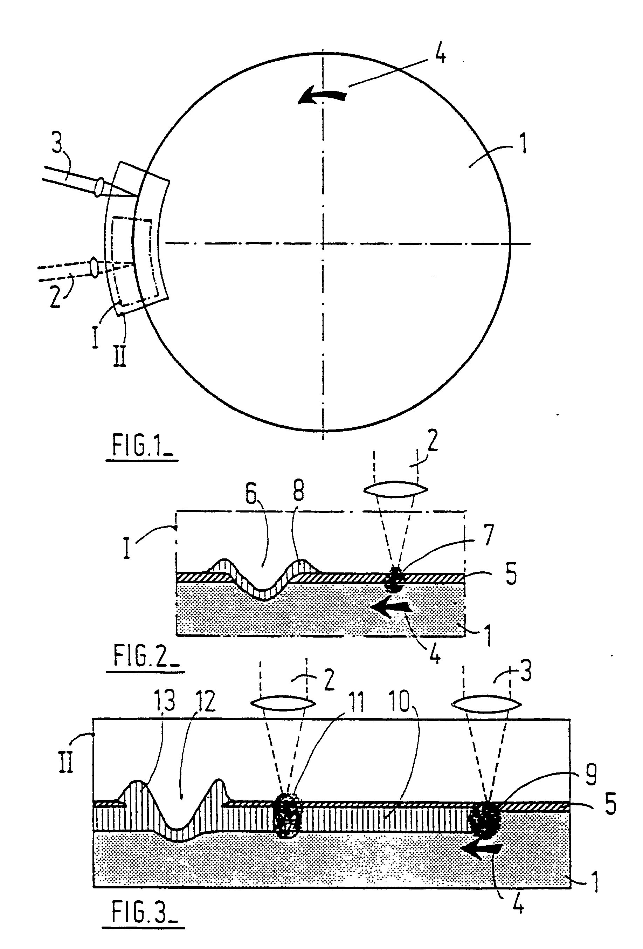

Dans toutes les figures, des éléments analogues sont désignés par des repères numériques identiques ; on outre, on n'a pas représenté les éléments qui ne sont pas directement nécessaires à la bonne compréhension du procédé de l'invention. Enfin, on n'a pas tenu compte de la courbure de la surface du cylindre dans les figures 2 et 3, car cette courbure ne joue aucune rôle perceptible en raison du faible diamètre (max. 500 µm) des microcratères.

Dans la figure 1, on a représenté, en vue frontale, un cylindre de laminoir (1) en position de marquage superficiel au moyen d'au moins un faisceau laser (2,3). Ce cylindre est mis en rotation autour de son axe dans le sens de la flèche courbe (4). Les cadres I et II correspondent respectivement aux vues plus détaillées qui font l'objet des figures 2 et 3.

La figure 2 montre, en coupe, un microcratère obtenu par le procédé de la technique antérieure précitée. Le cylindre (1) est pourvu d'un revêtement métallique (5) de faible épaisseur déposé par toute méthode appropriée, par exemple par électrolyse. Le cylindre ainsi revêtu est traité superficiellement au moyen d'un faisceau laser intermittent (2), focalisé sur la surface. Par le mécanisme rappelé plus haut, ce faisceau laser provoque la formation d'une série de microcratères tels que (6), dont le fond est tapissé par une couche d'alliage métallique résultant de la fusion en (7) du revêtement (5) et de la zone superficielle du cylindre (1). Le microcratère (6) est en outre entouré d'un bourrelet (8) également composé de ce même alliage. La figure 2 montre clairement que le bourrelet (8) est déposé sur le revêtement (5), auquel il n'adhère pas toujours de façon satisfaisante.

L'opération conforme à l'invention, illustrée dans la figure 3, assure par contre une excellente adhérence du bourrelet (8). Dans cette figure 3, le cylindre (1) est également pourvu d'un revêtement métallique (5) de faible épaisseur. Au cours de sa rotation suivant la flèche 4, le cylindre est traité superficiellement par un premier faisceau laser (3), continu, qui assure en (9) la fusion du revêtement (5) et de la zone superficielle du cylindre (1) ; il se forme ainsi, à la surface du cylindre (1), une couche ininterrompue d'alliage (10) composée du métal de revêtement (5) et du matériau du cylindre (1). Si l'alliage n'a pas atteint la totalité du métal de revêtement (5) fondu en (9), la couche (10) peut, après refroidissement et solidification conserver un revêtement (5) d'épaisseur réduite. Ensuite, la surface ainsi préparée est traitée au moyen d'un second faisceau laser (2), intermittent, qui assure une nouvelle fusion en (11) et forme une série de microcratères tels que (12). Dans la région d'impact d'une impulsion laser, le métal de revêtement (5) résiduel éventuel est fondu avec l'alliage (10); l'alliage résultant tapisse le fond du microcratère (12) et constitue le bourrelet (13) qui a ainsi la même composition que la couche (10). Le recouvrement du fond du microcratère (12) ainsi que le bourrelet (13) font donc intégralement partie de la couche d'alliage (10). La résistance à l'arrachement d'un bourrelet (13) est nettement supérieure à celle du bourrelet (8) constituent la structure de la figure 2.

Dans le procédé de la présente invention, la surface du cylindre est alliée avec le métal de revêtement sur toute son étendue, avant la formation des microcratères et des bourrelets qui constituent la rugosité. De ce fait, toute l'étendue de la surface du cylindre subit un durcissement qui accroît sa résistance à l'usure. Par exemple, une surface de cylindre simplement revêtue d'une couche de chrome d'une épaisseur de 0,5 µm présente une dureté Vickers de 500 ; après traitement au moyen d'un faisceau laser continu conformément à la présente invention, cette même surface présente une dureté Vickers de 1000. Enfin, les bourrelets présentent une résistance à l'arrachement accrue d'environ 80 % par rapport à celle des bourrelets antérieurs.

## Revendications

1. Procédé pour le traitement superficiel d'un cylindre de laminoir au moyen d'un faisceau laser intermittent, dans lequel on applique sur au moins une partie de la surface dudit cylindre un revêtement constitué, au moins en partie, d'une substance métallique, caractérisé en ce que l'on chauffe superficiellement le cylindre revêtu

EP 0 278 942 B1

jusqu'à une température suffisante pour provoquer la fusion dudit revêtement et d'une mince couche superficielle du cylindre, en ce que l'on forme à la surface du cylindre une couche ininterrompue d'alliage fondu composée d'au moins une partie dudit revêtement et de ladite mince couche superficielle du cylindre, en ce que l'on refroidit ladite couche d'alliage fondu et en ce que l'on effectue ensuite le marquage du cylindre au moyen d'un faisceau laser intermittent qui assure localement la fusion de ladite couche d'alliage et de la surface du cylindre ainsi que la formation de microcratères dont le fond et le bourrelet sont, après solidification, intégrés à ladite couche d'alliage.

2. Procédé suivant la revendication 1, caractérisé en ce que l'on chauffe superficiellement le cylindre revêtu au moyen d'un faisceau laser continu.

3. Procédé suivant l'une ou l'autre des revendications 1 et 2, caractérisé en ce que l'on met le cylindre revêtu en rotation autour de son axe longitudinal, en ce que l'on chauffe superficiellement ledit cylindre jusqu'à une température suffisante pour provoquer la fusion du revêtement et d'une mince couche superficielle du cylindre, au moyen d'un premier faisceau laser continu focalisé dont le point d'impact décrit une trajectoire hélicoïdale sur la surface du cylindre revêtu, en ce que l'on refroidit la couche d'alliage formée à l'interface entre le revêtement et la couche superficielle du cylindre et en ce que l'on marque le cylindre au moyen d'un second faisceau laser intermittent focalisé dont le point d'impact décrit, avec un certain retard, la même trajectoire hélicoïdale que le point d'impact dudit premier faisceau laser.

4. Procédé suivant la revendication 3, caractérisé en ce que ledit retard est suffisant pour que la couche d'alliage fondu par le premier faisceau laser ait le temps de se solidifier avant d'être frappée par le second faisceau laser.

5. Procédé suivant l'une ou l'autre des revendications 3 et 4, caractérisé en ce que ledit retard est inférieur à 0,5 s.


## Ansprüche

1. Verfahren zur Oberflächenbehandlung der Walze eines Walzwerks mittels eines intermittierenden Laserstrahls, wobei man auf mindestens einen Teil der Oberfläche jener Walze eine Beschichtung aus mindestens teilweise einer metallischen Substanz aufbringt, dadurch gekennzeichnet, daß man die beschichtete Walze an der Oberfläche auf eine Temperatur erhitzt, die ausreicht, jene Beschichtung und eine dünne Oberflächenschicht der Walze zum Schmelzen zu bringen, daß man auf der Walzenoberfläche eine durchgehende Schicht einer geschmolzenen Legierung aus mindestens einem Teil jener Beschichtung und jener dünnen Oberflächenschicht der Walze bildet, daß man jene Schicht aus geschmolzener Legierung abkühlt und daß man anschließend die Markierung der Walze mittels eines intermittierenden Laserstrahls durchführt, wodurch örtliches Schmelzen jener Legierungsschicht und der Walzenoberfläche sowie die Bildung von Mikrokratern, deren Boden und Umrandung nach Verfestigung einen integralen Bestandteil jener Legierungsschicht darstellen, gewährleistet sind.

2. Verfahren nach Anspruch 1, dadurch gekennzeichnet, daß man die beschichtete Walze mittels eines kontinuierlichen Laserstrahls an der Oberfläche erhitzt.

3. Verfahren nach Anspruch 1 oder 2, dadurch gekennzeichnet, daß man die beschichtete Walze um ihre Längsachse drehen läßt, daß man jene Walze an der Oberfläche mittels eines ersten kontinuierlichen fokussierten Laserstrahls, dessen Auftreffpunkt eine spiralförmige Bahn auf der Oberfläche der beschichteten Walze beschreibt, auf eine Temperatur erhitzt, die ausreicht, die Beschichtung und eine dünne Oberflächenschicht der Walze zum Schmelzen zu bringen, daß man die an der Grenzfläche zwischen der Beschichtung und der Oberflächenschicht der Walze gebildete Legierungsschicht abkühlt und daß man die Walze mittels eines zweiten intermittierenden fokussierten Laserstrahls, dessen Auftreffpunkt mit einer gewissen Verzögerung die gleiche spiralförmige Bahn wie der Auftreffpunkt jenes ersten Laserstrahls beschreibt, markiert.

4. Verfahren nach Anspruch 3, dadurch gekennzeichnet, daß jene Verzögerung der durch den ersten Laserstrahl geschmolzenen Legierungsschicht ausreichend Zeit zur Verfestigung gibt, bevor sie von dem zweiten Laserstrahl getroffen wird.

5. Verfahren nach Anspruch 3 oder 4, dadurch gekennzeichnet, daß jene Verzögerung weniger als 0,5 s beträgt.


## Claims

1. Method for the surface treatment of a roll of a rolling mill by means of an intermittent laser beam, in which a coating consisting, at least partly, of a metal substance is applied over at least part of the surface of the said

4

roll, characterised in that the surface of the coated roll is heated to a temperature sufficient to cause the fusion of the said coating with a thin surface layer of the roll, in that an uninterrupted layer of fused alloy, composed of at least part of the said coating and the said thin surface layer of the roll, is formed on the surface of the roll, in that the said layer of fused alloy is cooled, and in that the marking of the roll is subsequently performed using an intermittent laser beam which ensures the localised fusion of the said layer of alloy with the surface of the roll, and the formation of microcraters, the bottom and the rim of which are, after solidification, integrated into the said layer of alloy.

2. Method according to Claim 1, characterised in that the surface of the coated roll is heated by means of a continuous laser beam.

3. Method according to either of Claims 1 and 2, characterised in that the coated roll is rotated about its longitudinal axis, in that the surface of the said roll is heated to a temperature sufficient to cause the coating to fuse with a thin surface layer of the roll by means of a first focused continuous laser beam, the point of impact of which describes a helical trajectory over the surface of the coated roll, in that the layer of alloy formed at the interface between the coating and the surface layer of the roll is cooled, and in that the roll is marked by means of a second focused intermittent laser beam, the point of impact of which describes, with a certain delay, the same helical trajectory as the point of impact of the said first laser beam.

4. Method according to Claim 3, characterised in that the said delay is sufficient for the layer of alloy fused by the first laser beam to have time to solidify before being struck by the second laser beam.

5. Method according to either of Claims 3 and 4, characterised in that the said delay is less than 0.5 s.

FIG.1_

FIG.2_

FIG.3_